# FASCICULE DE BREVET EUROPEEN

(11) **EP 1 929 575 B1**
(45) Date de publication et mention de la délivrance du brevet: **26.01.2011**
(21) Numéro de dépôt: 06794514.7
(22) Date de dépôt: 01.08.2006
(51) Int. Cl.: H01M 8/24

(54) **INSTALLATION STATIONNAIRE DE FOURNITURE D'ENERGIE ELECTRIQUE COMPRENANT UNE PILE A COMBUSTIBLE**
STATIONÄRE VORRICHTUNG ZUR STROMVERSORGUNG MIT EINER BRENNSTOFFZELLE
FIXED INSTALLATION FOR SUPPLYING ELECTRIC POWER COMPRISING A FUEL CELL

(30) Priorité: 13.09.2005 FR 0552754
(43) Date de publication de la demande: 11.06.2008
(73) Titulaire: L'AIR LIQUIDE, Société Anonyme pour l'Etude et l'Exploitation des Procédés Georges Claude, 75007 Paris (FR)
(72) Inventeur: SANGLAN, Patrick, F-38180 Seyssins (FR)
(74) Mandataire: De Cuenca, Emmanuel Jaime
(86) Numéro de dépôt international: PCT/FR2006/050773
(87) Numéro de publication internationale: WO 2007/031663

(56) Documents cités:
- WO-A-2004/105172
- US-A- 5 856 034
- US-A1- 2002 187 380
- PATENT ABSTRACTS OF JAPAN vol. 2002, no. 11, 6 novembre 2002 (2002-11-06) & JP 2002 190313 A (FUJI ELECTRIC CO LTD), 5 juillet 2002 (2002-07-05)

## Description

La présente invention concerne les installations stationnaires de fourniture d'énergie électrique comprenant une pile à combustible alimentée en air et en carburant, disposée dans une enceinte.

On sait que les piles à combustible, notamment du type à membrane échangeuse de proton (PEM) sont sensibles à la température et incluent généralement des moyens de refroidissement par circulation de fluide.

Le document US 2002/187380 A1 decrit une enceinte de pile à combustible possédant des pieds de support péres pour fixer l'enceintes à un véhicule.

Le document US 5856034, considéré comme l'art antérieur le plus proche, décrit une enceriste pour une pile à combustible munie de pieds de support.

L'enceinte est munie également de ventilateurs assurant la circulation d'air à l'intérieur de l'enceinte. L'entée d'air est prévue latéralement.

La présente invention a pour objet de proposer une installation stationnaire à pile à combustible permettant de réguler simplement et de façon efficace et à très faibles coûts la température dans une large gamme de conditions météorologiques.

Pour ce faire, selon une caractéristique de l'invention, l'enceinte contenant la pile à combustible est posée sur le sol via des plots support, l'entrée d'air dans l'enceinte donnant sur le volume entre l'enceinte et le sol.

Selon des caractéristiques plus particulières de l'invention :
- l'entrée d'air comprend un ventilateur débitant dans l'enceinte,
- le volume entre l'enceinte et le sol est fermé périphériquement par des jupes, l'une de ces jupes comprenant au moins une ouverture d'entrée avantageusement pourvue d'un filtre
- le sol au-dessus de l'enceinte est revêtu de galets,
- le plancher de l'enceinte est réalisé en matériau thermiquement isolant D'autres caractéristiques et avantages de l'invention ressortiront de la description suivante, de modes de réalisation, donnés à titre illustratif mais nullement limitatif, faite en relation avec le dessin annexé, sur lequel :

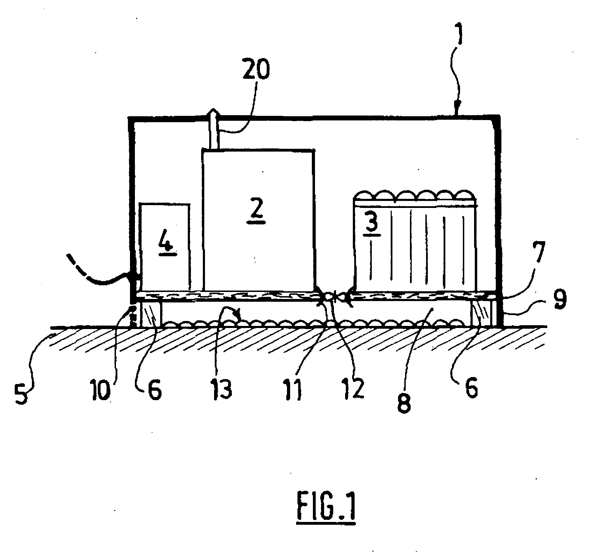

- la figure 1 est une vue schématique, en coupe verticale, d'une installation selon l'invention.

Comme représenté schématiquement sur la figure 1, une installation selon l'invention comprend, dans une enceinte 1, typiquement un conteneur « 20 pieds » (ou plus), un bloc pile à combustible 2 de type PEM utilisant de l'air et un carburant, typiquement de l'hydrogène stocké dans un cadre de bouteilles d'hydrogène 3, et une armoire électrique 4 commandant la pile et régulant le courant électrique fourni.

Selon l'invention, l'enceinte 1 est posée sur le sol 5 via au moins quatre plots 6 de faible hauteur de façon à ménager entre le plancher 7 de l'enceinte 1 et le sol 5 un volume intermédiaire 8. Le volume d'entresol 8 est fermé périphériquement par des jupes 9 dépendant des côtés de l'enceinte 1, l'une de ces jupes étant formée avec au moins une ouverture d'entrée, équipée d'un filtre à air 10, permettant l'entrée d'air dans le volume 8.

Le volume intérieur de l'enceinte 1 communique avec le volume intermédiaire 8 par un passage 11 formé dans le plancher 7 et pourvu d'un ventilateur 12 aspirant ainsi l'air ambiant via l'ouverture d'entrée avec filtre 10 le tunnel formé par le volume intermédiaire 8 le passage 11 à l'intérieur de l'enceinte 1 jusqu'aux ventilateurs du bloc pile à combustible 2. Les gaz d'échappement du bloc pile 2 sont rejetés à l'extérieur de l'enceinte par une cheminée 20.

Avantageusement, selon l'invention, la surface du sol 5 au-dessous du plancher 7 est revêtue d'un lit de galets lavés 13 évitant l'entraînement de poussières et augmentant la surface d'échange avec le sol. D'autre part, le plancher 7 est avantageusement en bois massif, présentant une bonne inertie thermique pour réaliser un écrantage supérieur du volume 8.

Avec un tel agencement, pour un conteneur 20 pieds, on dispose d'une surface d'échange d'environ 15 m2 avec le sol pour thermaliser l'air introduit dans l'enceinte et réguler ainsi la température de la pile à combustible en exploitant l'inertie thermique du sol 5 sans dépense énergétique supplémentaire.

Quoique l'invention ait été décrite en relation avec des modes de réalisations particuliers, elle ne s'en trouve pas limité mais est susceptible de modifications et de variantes qui apparaîtront à l'homme du métier dans le cadre des revendications ci-après.

## Revendications

1. Installation stationnaire de fourniture d'énergie électrique comprenant une pile à combustible (2) alimentée en air et en carburant, disposée dans une enceinte (1) posée sur le sol (5) via des plots support (6), **caractérisée en ce** l'entrée d'air (11) dans l'enceinte (1) donne sur le volume (8) entre l'enceinte et le sol.

2. Installation selon la revendication 1, **caractérisée en ce que** l'entrée d'air (11) comprend un ventilateur (12) débitant dans l'enceinte (1).

3. Installation selon l'une des revendications 1 et 2, **caractérisée en ce que** le volume (8) entre l'enceinte (1) et le sol (5) est fermé périphériquement par des jupes (9), l'une de ces jupes comprenant au moins une ouverture d'entrée (10).

4. Installation selon la revendication 3, **caractérisée en ce que** l'ouverture d'entrée (10) comprend un filtre à air.

5. Installation selon l'une des revendications précédentes, **caractérisée en ce que** le sol au-dessous de l'enceinte (1) est revêtu de galets (13).

6. Installation selon l'une des revendications précédentes, **caractérisée en ce que** le plancher (7) de l'enceinte (1) est en matériau thermiquement isolant.

7. Installation selon l'une des revendications 1 à 6, **caractérisée en ce que** la pile à combustible (2) est du type à membrane échangeuse de protons (PEM).

8. Installation selon l'une des revendications 1 à 7, **caractérisée en ce que** le carburant est l'hydrogène.

## Claims

1. Fixed installation for supplying electrical power, comprising a fuel cell (2) supplied with air and with fuel, positioned in an enclosed space (1) placed on the ground (5) via support blocks (6), **characterized in that** the air inlet (11) into the enclosed space (1) opens onto the volume (8) between the enclosed space and the ground.

2. Fixed installation according to claim 1, **characterized in that** the air inlet (11) comprises a fan (12) delivering into the enclosed space (1).

3. Installation according to one of claims 1 and 2, **characterized in that** the volume (8) between the enclosed space (1) and the ground (5) is closed around its periphery by skirts (9), one of these skirts comprising at least one inlet opening (10).

4. Installation according to claim 3, **characterized in that** the inlet opening (10) comprises an air filter.

5. Installation according to one of the preceding claims, **characterized in that** the ground underneath the enclosed space (1) is covered with pebbles (13).

6. Installation according to one of the preceding claims, **characterized in that** the floor (7) of the enclosed space (1) is made of a thermally insulating material.

7. Installation according to one of Claims 1 to 6, **characterized in that** the fuel cell (2) is of the proton exchange membrane (PEM) type.

8. Installation according to one of Claims 1 to 7, **characterized in that** the fuel is hydrogen.

## Patentansprüche

1. Stationäre Anlage zur Zuführung von elektrischer Energie mit einer Brennstoffzelle (2), die mit Luft und Brennstoff versorgt wird und in einer über Stützblöcke (6) auf dem Boden (5) platzierten Kammer (1) angeordnet ist, **dadurch gekennzeichnet, dass** der Lufteinlass (11) in die Kammer (1) in einem Volumen (8) zwischen der Kammer und dem Boden mündet.

2. Anlage nach Anspruch 1, **dadurch gekennzeichnet, dass** der Lufteinlass (11) ein in die Kammer (1) zuführendes Gebläse (12) umfasst.

3. Anlage nach einem der Ansprüche 1 und 2, **dadurch gekennzeichnet, dass** das Volumen (8) zwischen der Kammer (1) und dem Boden (5) um den Umfang durch Schürzen (9) geschlossen ist, wobei eine dieser Schürzen mindestens eine Einlassöffnung (10) umfasst.

4. Anlage nach Anspruch 3, **dadurch gekennzeichnet, dass** die Einlassöffnung (10) einen Luftfilter umfasst.

5. Anlage nach einem der vorhergehenden Ansprüche, **dadurch gekennzeichnet, dass** der Boden unter der Kammer (1) mit Kieselsteinen (13) bedeckt ist.

6. Anlage nach einem der vorhergehenden Ansprüche, **dadurch gekennzeichnet, dass** der Boden (7) der Kammer (1) aus einem thermisch isolierenden Material besteht.

7. Anlage nach einem der Ansprüche 1 bis 6, **dadurch gekennzeichnet, dass** die Brennstoffzelle (2) der Protonen-Austausch-Membran-Art (PEM-Art, PEM: proton exchange membrane) ist.

8. Anlage nach einem der Ansprüche 1 bis 7, **dadurch gekennzeichnet, dass** der Brennstoff Wasserstoff ist.
